# EUROPEAN PATENT SPECIFICATION

(11) **EP 2 857 965 B1**
(45) Date of publication and mention of the grant of the patent: **21.03.2018**
(21) Application number: 13797649.4
(22) Date of filing: 28.05.2013
(51) Int. Cl.: G06F 9/445, G06F 9/44

(54) **METHOD AND DEVICE FOR GENERATING FIRMWARE OVER-THE-AIR UPGRADE PACKAGE**
VERFAHREN UND VORRICHTUNG ZUR ERZEUGUNG EINES "OVER-THE-AIR" -FIRMWAREAKTUALISIERUNGSPAKETS
PROCÉDÉ ET DISPOSITIF PERMETTANT DE GÉNÉRER UN PROGRAMME DE MISE À NIVEAU D'UN MICROLOGICIEL PAR LIAISON RADIO

(30) Priority: 28.05.2012 CN 201210169141
(43) Date of publication of application: 08.04.2015
(73) Proprietor: Huawei Device (Dongguan) Co., Ltd., Dongguan, Guangdong, PRC, 523808 (CN)
(72) Inventor: TONG, Deli, Shenzhen Guangdong 518129 (CN)
(74) Representative: Pfenning, Meinig & Partner mbB
(86) International application number: PCT/CN2013/076303
(87) International publication number: WO 2013/178048

(56) References cited:
- EP-A1- 1 533 695
- WO-A1-02/41147
- WO-A1-2007/148899
- WO-A2-2009/074444
- CN-A- 1 904 837
- CN-A- 101 026 464
- CN-A- 101 425 931

## Description

### TECHNICAL FIELD

The present invention relates to the field of wireless communications, and more specifically, to a method and an apparatus for generating a firmware over the air (FOTA for short) upgrade package.

### BACKGROUND

Rapidly changing mobile terminals emerge with technology development. To satisfy people's pursuit of novelties, functions of the mobile terminals are constantly extended. An excessively early software version of a mobile terminal may affect use of new functions; therefore, update online functions become more popular. A FOTA upgrade online function is used to upgrade a mobile terminal from an earlier version to a later version over the air. A conventional production manner is to produce a FOTA upgrade package in accordance with a difference between an early version and a later version, so that a user can download the upgrade package from a network and use the upgrade package to upgrade a mobile terminal. Generally, 2 to 3 versions are maintained for a mobile terminal, and for a mobile terminal that is generally applicable overseas, there are versions of more stages for different countries. In the prior art, if it needs to be satisfied that mobile terminals using different software versions is upgraded from an early version to a latest version, a software version provider, such as a mobile terminal manufacturer or an operator, needs to produce a FOTA upgrade package for each early version, which increases software development time and maintenance costs, thereby greatly increasing operation costs.

WO 2007/148899 discloses a system and method for updating a program of a mobile device using an over-the-air programming mechanism. In detail, an upgrade package processor generates an upgrade package from an old version and a new version of the program and then transmits the upgrade package to an upgrade package serve.

WO 02/41147 discloses an update distribution system. The update distribution system includes an update generator and a client device. The update generator receives an old version of a software application, and a new version of a software application. The update generator produces an update package comprising an instruction set which represents a plurality of operations that are desirably used to transform the first original code version into the second updated code version. The update package is then transferred to a client device via a communications medium.

EP 1533695 discloses a method of differentially updating stored date in a mobile terminal from a first data version to an updated version.

### SUMMARY

Embodiments of the present invention provide a method and an apparatus for generating a FOTA upgrade package, a software upgrade method, and a mobile terminal, which can reduce operation costs.

According to one aspect, a method for generating a firmware over the air (FOTA) upgrade package is provided and includes: generating transition software according to comparison of file names and file binary formats of software of two to-be-upgraded versions among at least two to-be-upgraded versions; and generating a FOTA upgrade package according to comparison of file names and file binary formats between the transition software and final-version software.

According to another aspect, an apparatus for generating a firmware over the air (FOTA) upgrade package is provided and includes: a first generating unit, configured to generate transition software according to comparison of file names and file binary formats of software of two to-be-upgraded versions among at least two to-be-upgraded versions; and a second generating unit, configured to generate a FOTA upgrade package according to comparison of file names and file binary formats between the transition software generated by the first generating unit and final-version software, where the FOTA upgrade package is used to simultaneously support online upgrade of the software of the two to-be-upgraded versions to the final-version software by using a wireless network.

According to another aspect, a software upgrade method is provided and includes: acquiring a firmware over the air (FOTA) upgrade package generated by using the foregoing method, and using the FOTA upgrade package to upgrade a software system of a mobile terminal.

According to another aspect, a mobile terminal is provided and includes an acquiring unit and an upgrading unit, where the acquiring unit is configured to acquire a firmware over the air (FOTA) upgrade package generated according to the foregoing method, and the upgrading unit is configured to upgrade a software system of the mobile terminal by using the FOTA upgrade package.

The foregoing technical solutions provide a method and an apparatus for generating a FOTA upgrade package, so that a software version provider may use a same FOTA upgrade package to upgrade a plurality of early versions, which meets a requirement of upgrading a plurality of early versions of different mobile users to a latest version by using a same FOTA upgrade package, and reduces development and maintenance costs for the software version provider at the same time.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is schematic block diagram of a method for generating a FOTA upgrade package according to an embodiment of the present invention;
FIG. 2 is schematic block diagram of a method for generating a FOTA upgrade package according to another embodiment of the present invention;
FIG. 3A is schematic block diagram of an apparatus for generating a FOTA upgrade package according to an embodiment of the present invention;
FIG. 3B is schematic block diagram of an apparatus for generating a FOTA upgrade package according to another embodiment of the present invention;
FIG. 4 is a schematic flowchart of a software upgrade method according to an embodiment of the present invention;
FIG. 5 is a schematic flowchart of a software upgrade method according to another embodiment of the present invention; and
FIG. 6A and FIG. 6B are schematic block diagrams of a mobile terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

An embodiment of the present invention provides a method for generating a FOTA upgrade package, so that a software version provider may use a same FOTA upgrade package to upgrade a plurality of early versions.

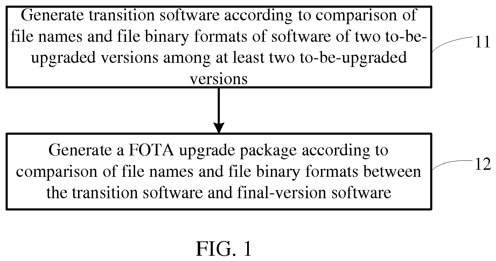

FIG. 1 is schematic block diagram of a method 10 for generating a FOTA upgrade package according to the embodiment of the present invention.

11: Generate transition software according to comparison of file names and file binary formats of software of two to-be-upgraded versions among at least two to-be-upgraded versions.

12: Generate a FOTA upgrade package according to comparison of file names and file binary formats between the transition software and final-version software.

The embodiment of the present invention provides a method for generating a FOTA upgrade package, so that a software version provider may use a same FOTA upgrade package to upgrade a plurality of early versions, which meets a requirement of upgrading a plurality of early versions of different mobile users to a latest version by using a same FOTA upgrade package, and reduces development and maintenance costs for the software version provider at the same time.

Optionally, the generating transition software according to comparison of file names and file binary formats of software of two to-be-upgraded versions among at least two to-be-upgraded versions specifically includes: comparing the software of the two to-be-upgraded versions; saving files, which have a same file name and are in a same binary format, as a common file of the transition software; saving files, which have different file names or a same file name and are in different binary formats, as differentiation files of the transition software; and generating the transition software according to the common file of the transition software and the differentiation files of the transition software.

Optionally, the saving files, which have different file names or a same file name and are in different binary formats, as differentiation files of the transition software specifically includes: when the final-version software includes a file with the same name as the files, in the software of the two to-be-upgraded versions, that have the same file name but are in different binary formats, excluding the files, which have the same file name but are in different binary formats, from the differentiation files of the transition software; when the final-version software does not include a file with the same name as the files, in the software of the two to-be-upgraded versions, that have the same file name but are in different binary formats, retaining the files, which have the same file name but are in different binary formats, in the differentiation files of the transition software; when the software of one to-be-upgraded version has a file excluded from the software of the other to-be-upgraded version, and a file with a same name as the excluded file is included in the final-version software, excluding the file from the differentiation files of the transition software; when the software of one to-be-upgraded version has a file excluded from the software of the other to-be-upgraded version, and a file with a same name as the excluded file is not included in the final-version software, retaining the file in the differentiation files of the transition software.

Optionally, the generating a FOTA upgrade package according to comparison of file names and file binary formats between the transition software and final-version software specifically includes: comparing the transition software and the final-version software; saving a file, which is included in the final-version software and is not included in the transition software, as an overwrite file of the FOTA upgrade package; saving different parts of the files, which have the same file name but are in different binary formats, as a difference file of the FOTA upgrade package; and generating an upgrade software package according to the overwrite file and the difference file of the FOTA upgrade package.

Optionally, the generating a FOTA upgrade package according to comparison of file names and file binary formats between the transition software and final-version software further includes: saving an upgrade package of a secure digital memory card of the final-version software as an upgrade file of the FOTA upgrade package. Correspondingly, the generating the transition software according to the overwrite file and the difference file of the FOTA upgrade package specifically includes: generating the FOTA upgrade package according to the upgrade file, the overwrite file, and the difference file of the FOTA upgrade package.

Optionally, the generating a FOTA upgrade package according to comparison of file names and file binary formats between the transition software and final-version software further includes: writing a file, which is included in the transition software and is not included in the final-version software, into an upgrade script of the FOTA upgrade package as a to-be-deleted file, so as to delete the to-be-deleted file by using a script command in an upgrade process.

Optionally, when the software of the two to-be-upgraded versions is first-version software and second-version software, transition software, namely, first transition software, is generated according to comparison of the first-version software and the second-version software. A FOTA upgrade package, namely, a first FOTA upgrade package, is generated according to comparison of file names and file binary formats between the first transition software and the final-version software, where the first FOTA upgrade package is used to simultaneously support online upgrade of the software of the two to-be-upgraded versions, namely, the first-version software and the second-version software, to the final-version software by using the wireless network.

Optionally, when software of more than two to-be-upgraded versions is included, and there are K+2 to-be-upgraded versions, where K is a positive integer, K+1th transition software is generated according to comparison of file names and file binary formats between K+2th-version software and Kth transition software, where K is the positive integer; a K+1th FOTA upgrade package is generated according to comparison of file names and file binary formats between the K+1th transition software and the final-version software, where the K+1th FOTA upgrade package is used to simultaneously support online upgrade of software of the K+2 to-be-upgraded versions to the final-version software by using the wireless network.

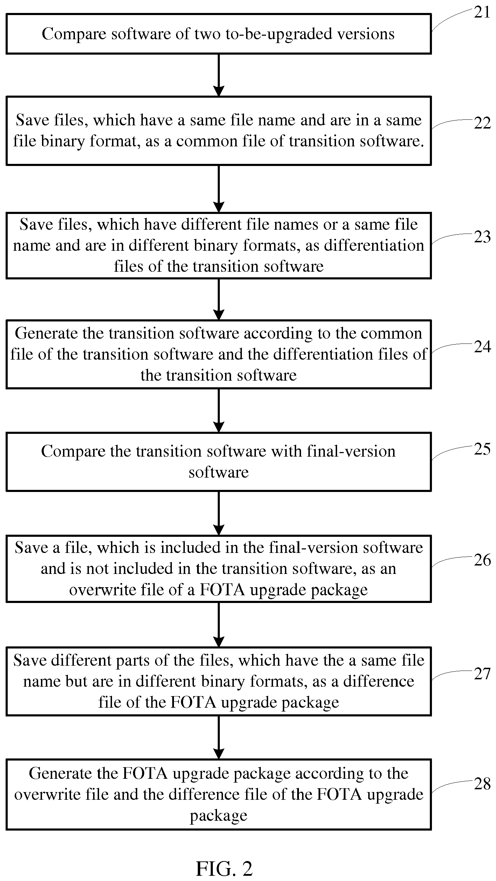

FIG. 2 is schematic block diagram of a method 20 for generating a FOTA upgrade package according to another embodiment of the present invention.

21: Compare software of two to-be-upgraded versions.

If a FOTA upgrade package is used to upgrade a plurality of early versions, definitely there are differences between the plurality of early versions. These differences include the following three cases. To simplify description in the following, the embodiment of the present invention uses two to-be-upgraded early versions as an example. First-version software is referred to as an a1 version hereinafter, and second-version software is referred to as an a2 version hereinafter. Transition software that is generated based on the a1 version and the a2 version is referred to as a b1 version hereinafter. Final-version software is referred to as a c1 version hereinafter, and the final-version software is a version to which the a1 version and the a2 version are finally upgraded.
(1) The a1 and a2 versions include files that have a same file name and a same binary file.
(2) The a1 and a2 versions include files that have a same file name but different binary files.
(3) The a1 or a2 version includes a file that is not included in the other version, where the file is a file excluded from one of the two versions, and a file name of the file appears only in one of the two versions.

22: Save files, which have a same file name and are in a same file binary format, as a common file of transition software.

For case (1), same files in the two early versions are retained in the b1 version.

Therefore, a structure of the same files in the different early versions is not damaged in the b1 version. In this way, the FOTA upgrade package generated according to the b1 version can also ensure normal upgrade of these files.

23: Save files, which have different file names or a same file name and are in different binary formats, as differentiation files of the transition software.

For case (2), processing varies according to a situation in the c1 version. If the c1 version also includes a file with the same name as the foregoing files, the files are deleted from the b1 version, so that this type of file is upgraded in an overwriting manner after the FOTA upgrade package is produced. If the c1 version does not include such a file, the file with the same name in the a1 or a2 version is retained in the b1 version, so that the file is deleted by using a script after the FOTA upgrade package is produced, thereby ensuring that upgraded versions are consistent.

During an upgrade of a software version, a purpose of overwriting or deleting the file in the FOTA upgrade package generated according to the b1 version is achieved by the following: using a file newly added after the c1 and b1 are compared for copying and overwriting, and deleting a file by using a script.

For case (3), processing is similar to that of case (2). When the a1 or a2 version includes a file that does not exist in the other version, where the file that does not exist may be: after the a1 version and the a2 version are compared, a file included in the a1 version a1 but not included in the a2 version, or a file included in the a2 version but not included in the a1 version, that is, a file that is excluded from one of the a1 version and the a2 version, if this file exists in the c1 version, the file is deleted from the b1 version, so that this type of file is upgraded in an overwriting manner after the FOTA upgrade package is produced; if this file does not exist in the c1 version, the file is included in the b1 version, so that the file is deleted by using a script after the FOTA upgrade package is produced, thereby ensuring that upgraded versions are consistent.

24: Generate the transition software according to the common file of the transition software and the differentiation files of the transition software.

25: Compare the transition software with final-version software.

Similar to comparison of the software of the two early versions, the following cases may occur when the transition software version b1 is compared with the final-version software version c1.
(4) The b1 and c1 versions include files with a same file name.
(5) The c1 version includes a file that is not included in the b1 version.
(6) The b1 version includes a file that is not included in the c1 version.

26: Save a file, which is included in the final-version software and is not included in the transition software, as an overwrite file of a FOTA upgrade package.

For case (5), the file included in the c1 and not included in the b1 is saved, in a form of an original file, in a root directory of the FOTA upgrade package according to a directory structure of the file in a mobile terminal and serves as the overwrite file of the FOTA upgrade package. The file included in the c1 and not included in the b1 may be a file with a same name as a file that is included in the a1 version but not included in the a2 version, may also be a file with a same name as a file that is included in the a2 version but not included in the a1 version, may also be a file with a same name as files that are included in the a1 and a2 versions, which have the same name but are in different binary formats, and may further be a file not included in either the a1 version or the a2 version.

27: Save different parts of the files, which have the same file name but are in different binary formats, as a difference file of the FOTA upgrade package.

For case (4), binary comparison is performed on the files with the same name in the b1 and c1 versions. When binary formats of the files with the same name are the same, the files are not included in the FOTA upgrade package. When binary formats of the files with the same name are different, a difference file is generated based on different parts and saved in a patch (patch) directory of the FOTA upgrade package.

28: Generate the FOTA upgrade package according to the overwrite file and the difference file of the FOTA upgrade package.

Optionally, for case (6), the extra file in the b1 version, that is, the file that does not exist in the c1 version, is written into an upgrade script, and the file is deleted by using a script command in an upgrade process. Particularly, deleting a file from the FOTA upgrade package is directly deleting the file by using a shell command in the script. If the file does not exist in the b1 version, no impact is exerted. In this way, a size of the generated FOTA upgrade package is further decreased, thereby improving efficiency of an upgrade over the air.

In addition, same as the prior art, the FOTA upgrade package further includes an upgrade package of a secure digital memory card (Secure Digital Memory Card, SD card for short) of the c1 version. The upgrade package of the SD card may be saved in the root directory of the FOTA upgrade package.

Software of a transition version is obtained by merging the two early versions and then is compared with the final-version software for generating the FOTA upgrade package, which can achieve a purpose of upgrading a plurality of early versions by using a same FOTA upgrade package. In addition, a size of the FOTA upgrade package is decreased as much as possible by using the foregoing method for generating a FOTA upgrade package, which helps a mobile user to acquire the FOTA upgrade package over the air.

Optionally, if there are more than two early versions, for example, further including a third software version (also referred to as an a3 version) and a fourth software version (also referred to as an a4 version), steps 21 to 24 in the foregoing method are executed repeatedly to merge the b1 version and the a3 version to obtain a transition software version b2, and merge the b2 version and the a4 version to obtain a later transition software version b3, and so on. Then, steps 25 to 28 in the foregoing method are executed to generate a FOTA upgrade package according to last transition software and the final-version software version c1. By using the foregoing method, the generated FOTA upgrade package can meet a requirement of upgrading mobile terminals of different versions, thereby saving labor costs for a software version provider, and saving costs of part of hardware used for storage.

In addition, further, when the software version provider provides a version later than the final-version software version c1, for example, a c2 version, a FOTA upgrade package is generated according to the c1 version and the c2 version by executing steps 25 to 28 in the foregoing method. By always maintaining one FOTA upgrade package, labor costs are saved for the software version provider, and costs of part of hardware used for storage are saved.

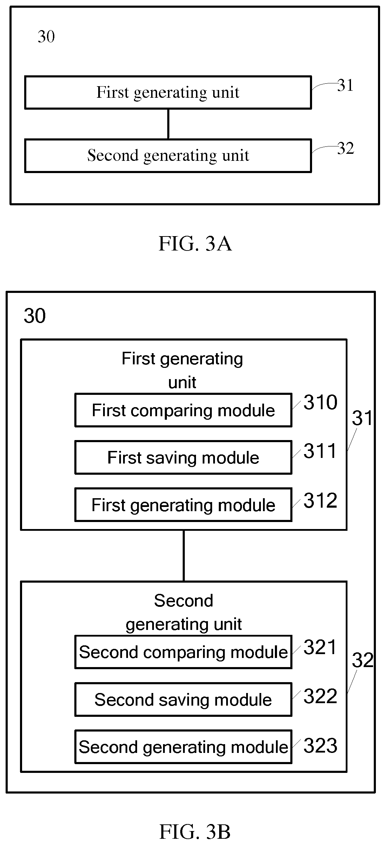

FIG. 3A and FIG. 3B are schematic block diagrams of an apparatus 30 for generating a FOTA upgrade package according to an embodiment of the present invention. The apparatus 30 includes a first generating unit 31 and a second generating unit 32.

The first generating unit 31 is configured to generate transition software according to comparison of file names and file binary formats of software of two to-be-upgraded versions among at least two to-be-upgraded versions.

The second generating unit 32 is configured to generate a FOTA upgrade package according to comparison of file names and file binary formats between the transition software generated by the first generating unit and final-version software, where the FOTA upgrade package is used to simultaneously support online upgrade of the software of the two to-be-upgraded versions to the final-version software by using a wireless network.

The embodiment of the present invention provides an apparatus for generating a FOTA upgrade package, so that a software version provider may use a same FOTA upgrade package to upgrade a plurality of early versions, which meets a requirement of upgrading a plurality of early versions of different mobile users to a latest version by using a same FOTA upgrade package, and reduces development and maintenance costs for the software version provider at the same time.

Optionally, as shown in FIG. 3B, the first generating unit 31 of the apparatus 30 specifically includes a first comparing module 310, a first saving module 311, and a first generating module 312.

The first comparing module is configured to compare the software of the two to-be-upgraded versions.

The first saving module is configured to save files, which have a same file name and are in a same file binary format, as a common file of the transition software; and is further configured to save files, which have different file names or a same file name and are in different binary formats, as differentiation files of the transition software.

The first generating module is configured to generate the transition software according to the common file of the transition software and the differentiation files of the transition software that are saved by the first saving module.

Optionally, the first saving module is specifically configured to: when the final-version software includes a file with the same name as the files, in the software of the two to-be-upgraded versions, that have the same file name but are in different binary formats, exclude the files, which have the same file name but are in different binary formats, from the differentiation files of the transition software; when the final-version software does not include a file with the same name as the files, in the software of the two to-be-upgraded versions, that have the same file name but are in different binary formats, retain the files, which have the same file name but are in different binary formats, in the differentiation files of the transition software; when the software of one to-be-upgraded version has a file excluded from the software of the other to-be-upgraded version, and a file with a same name as the excluded file is included in the final-version software, exclude the file from the differentiation files of the transition software; when the software of one to-be-upgraded version has a file excluded from the software of the other to-be-upgraded version, and a file with a same name as the excluded file is not included in the final-version software, retain the file in the differentiation files of the transition software.

Optionally, as shown in FIG. 3B, the second generating unit 32 of the apparatus 30 specifically includes a second comparing module 320, a second saving module 321, and a second generating module 322.

The second comparing module is configured to compare the transition software and the final-version software.

The second saving module is configured to save a file, which is included in the final-version software and is not included in the transition software generated by the second comparing module, as an overwrite file of the FOTA upgrade package; and is further configured to save different parts of the files, which have the same file name but are in different binary formats, as a difference file of the FOTA upgrade package.

The second generating module is configured to generate the firmware software package according to the overwrite file and the difference file of the FOTA upgrade package that are saved by the second saving module.

Optionally, the second saving module is further configured to save an upgrade package of a secure digital memory card of the final-version software as an upgrade file of the FOTA upgrade package. Correspondingly, the second generating module is specifically configured to generate the FOTA upgrade package according to the upgrade file, the overwrite file, and the difference file of the FOTA upgrade package that are saved by the second saving module.

Optionally, the first generating module is further configured to write a file, which is included in the transition software and is not included in the final-version software, into an upgrade script of the FOTA upgrade package as a to-be-deleted file, so as to delete the to-be-deleted file by using a script command in an upgrade process.

Optionally, when the software of the two to-be-upgraded versions is first-version software and second-version software, the apparatus is specifically configured to: the first generating unit specifically generates transition software, namely, first transition software, according comparison of the first-version software and the second-version software, and the second generating unit generates a FOTA upgrade package, namely, a first FOTA upgrade package, according to comparison of file names and file binary formats between the first transition software generated by the first generating unit and the final-version software, where the first FOTA upgrade package is used to simultaneously support online upgrade of the software of the two to-be-upgraded versions, namely, the first-version software and the second-version software, to the final-version software by using the wireless network.

Optionally, the apparatus is further configured to: when software of more than two to-be-upgraded versions is included, and there are K+2 to-be-upgraded versions, where K is a positive integer, the first generating unit is specifically configured to generate K+1th transition software according to comparison of file names and file binary formats between K+2th-version software and Kth transition software, where K is the positive integer; and the second generating unit is specifically configured to generate a K+1th FOTA upgrade package according to comparison of file names and file binary formats between the K+1th transition software generated by the first generating unit and the final-version software, where the K+1th FOTA upgrade package is used to simultaneously support online upgrade of software of the K+2 to-be-upgraded versions to the final-version software by using the wireless network.

The apparatus 30 implements the foregoing method 10 and/or 20, and for brevity, specific details are not described herein again.

The embodiment of the present invention provides an apparatus for generating a FOTA upgrade package, so that a software version provider may use a same FOTA upgrade package to upgrade a plurality of early versions, which meets a requirement of upgrading a plurality of early versions of different mobile users to a latest version by using a same FOTA upgrade package, and reduces development and maintenance costs for the software version provider at the same time.

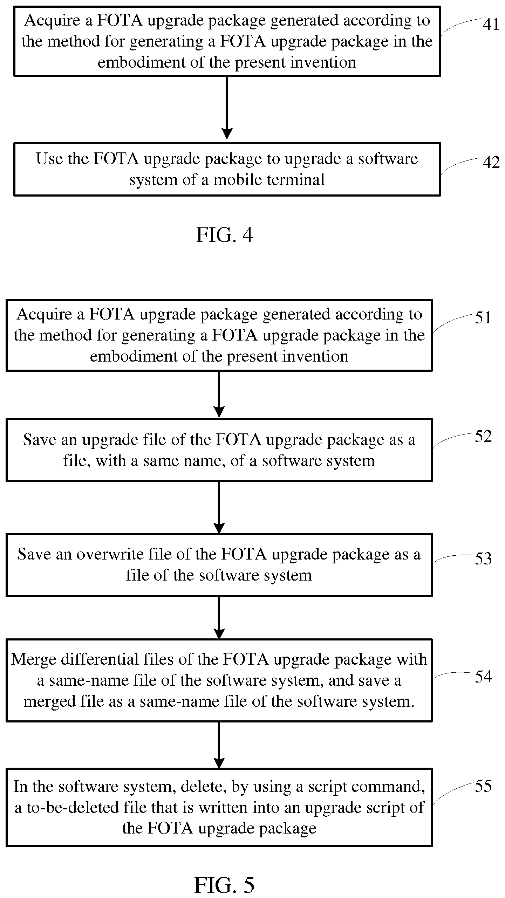

In the following, by using a FOTA upgrade package generated by the foregoing method and apparatus for generating a FOTA upgrade package, FIG. 4 shows a schematic flowchart of a software upgrade method 40 according to an embodiment of the present invention. The method 40 includes the following content:
41: Acquire the FOTA upgrade package generated according to the method for generating a FOTA upgrade package in the embodiment of the present invention.
42: Use the FOTA upgrade package to upgrade a software system of a mobile terminal.

The embodiment of the present invention provides a software upgrade method, so that a plurality of early versions of mobile users can be upgraded to a latest version by using one FOTA upgrade package; and a reduced size of the FOTA upgrade package helps the mobile users to acquire the FOTA upgrade package.

FIG. 5 is a schematic flowchart of a software upgrade method 50 according to another embodiment of the present invention. The method 50 includes the following content:
51: Acquire the FOTA upgrade package generated according to the method for generating a FOTA upgrade package in the embodiment of the present invention.

A mobile terminal acquires, over the air, the FOTA upgrade package generated in the foregoing embodiment. An acquiring manner is the same as that in the prior art. For the method for generating the FOTA upgrade package, reference is made to, for example, the embodiment in FIG. 2. In this embodiment, the generated FOTA upgrade package includes an upgrade file, an overwrite file, and a difference file.

52: Save an upgrade file of the FOTA upgrade package as a file, with a same name, of a software system.

It can be known, from the embodiment of generating the FOTA upgrade package, that an upgrade package of a secure digital memory card of the final-version software is saved as the upgrade file of the FOTA upgrade package.

53: Save an overwrite file of the FOTA upgrade package as a file of the software system.

It can be known, from the embodiment of generating the FOTA upgrade package, that a file included in the final-version software but not included in transition software is saved as an overwrite file of the FOTA upgrade package. A method for upgrading this type of file is to directly overwrite the files over an original version. This type of file can be separately saved as a complete file in the upgrade package.

54: Merge a difference file of the FOTA upgrade package with a same-name file of the software system, and save a merged file as a same-name file of the software system.

It can be known, from the embodiment of generating the FOTA upgrade package, that different parts of files, which have a same file name and are in different binary formats and are in the transition software and the final-version software, are saved as a difference file of the FOTA upgrade package.

55: In the software system, delete, by using a script command, a to-be-deleted file that is written into an upgrade script of the FOTA upgrade package.

It can be known, from the embodiment of generating the FOTA upgrade package, that a file that is included in the transition software but is not included in the final-version software is written into the upgrade script of the FOTA upgrade package as a to-be-deleted file.

The embodiment of the present invention provides a software upgrade method, so that a plurality of early versions of mobile users can be upgraded to a latest version by using a FOTA upgrade package generated in another embodiment of the present invention; a reduced size of the FOTA upgrade package helps the mobile users to acquire the FOTA upgrade package.

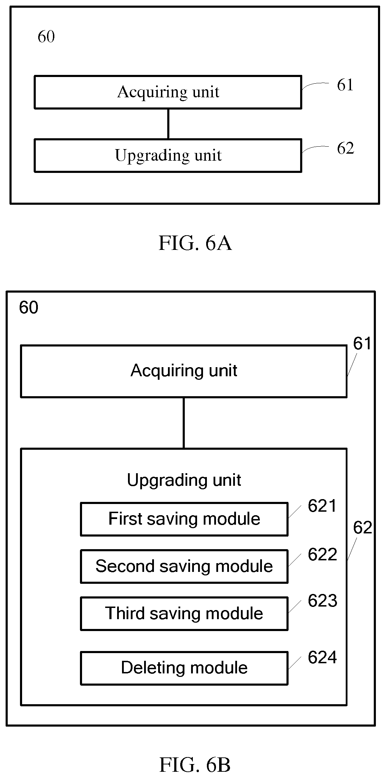

FIG. 6A is a schematic block diagram of a mobile terminal 60 according to an embodiment of the present invention, where the mobile terminal 60 includes an acquiring unit 61 and an upgrading unit 62.

The acquiring module 61 is configured to acquire a firmware over the air FOTA upgrade package generated according to the method for generating a FOTA upgrade package in the embodiment of the present invention.

The upgrading unit 62 is configured to upgrade a software system of the mobile terminal by using the FOTA upgrade package.

The embodiment of the present invention provides a software upgrade apparatus, so that a plurality of early versions of mobile users can be upgraded to a latest version by using a FOTA upgrade package generated in another embodiment of the present invention, which helps the mobile users to acquire the FOTA upgrade package.

Optionally, as shown in FIG. 6B, the upgrading unit 62 specifically includes: a first saving module 621, a second saving module 622, and a third saving module 623.

When the FOTA upgrade package includes an upgrade file, an overwrite file, and a difference file, the first saving module 621 saves the upgrade file of the FOTA upgrade package as a file, with a same name, of the software system; the second saving module 622 saves the overwrite file of the FOTA upgrade package as a file of the software system; and the third saving module 623 merges the difference file of the FOTA upgrade package with the same-name file of the software system, and saves a merged file as a same-name file of the software system.

The upgrading unit further includes a deleting module 624. The deleting module 624 deletes, from the software system by using a script command, a to-be-deleted file that is written into an upgrade script of the FOTA upgrade package.

The mobile terminal 60 implements the method 40 and/or 50. For brevity, specific details are omitted herein. A mobile terminal (Mobile Terminal), also referred to as a user equipment (UE, User Equipment), a mobile user equipment, and the like, may communicate with one or more core networks through a radio access network (for example, RAN, Radio Access Network). The user equipment may be a mobile terminal, such as a mobile phone (also referred to as a "cellular" phone) and a computer with a mobile terminal. For example, the user equipment may be a portable, pocket-sized, handheld, computer built-in, or in-vehicle mobile apparatus, which exchanges language and/or data with the radio access network.

The embodiment of the present invention provides a software upgrade apparatus, so that a plurality of early versions of mobile users can be upgraded to a latest version by using a FOTA upgrade package generated in another embodiment of the present invention; a reduced size of the FOTA upgrade package helps the mobile users to acquire the FOTA upgrade package.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for generating a firmware over the air, FOTA upgrade package, comprising:
generating (11) transition software according to comparison of file names and file binary formats of software of two to-be-upgraded versions; and
generating (12) a FOTA upgrade package according to comparison of file names and file binary formats between the transition software and final-version software, wherein the FOTA upgrade package is used to simultaneously support online upgrade of the software of the two to-be-upgraded versions to the final-version software by using a wireless network.

2. The method according to claim 1, wherein the generating (11) transition software according to comparison of file names and file binary formats of software of two to-be-upgraded versions specifically comprises:
comparing (21) the software of the two to-be-upgraded versions;
saving (22) files, which have a same file name and are in a same file binary format, as a common file of the transition software;
saving (23) files, which have different file names or which have a same file name and are in different binary formats, as differentiation files of the transition software; and
generating (24) the transition software according to the common file of the transition software and the differentiation files of the transition software.

3. The method according to claim 2, wherein the saving (23) files, which have different file names or which have a same file name and are in different binary formats, as differentiation files of the transition software specifically comprises:
when the final-version software comprises a file with the same name as the files, in the software of the two to-be-upgraded versions, that have the same file name but are in different binary formats, excluding the files, which have the same file name but are in different binary formats, from the differentiation files of the transition software;
when the final-version software does not comprise a file with the same name as the files, in the software of the two to-be-upgraded versions, that have the same file name but are in different binary formats, retaining the files, which have the same file name but are in different binary formats, in the differentiation files of the transition software;
when the software of one to-be-upgraded version has a file excluded from the software of the other to-be-upgraded version, and a file with a same name as the excluded file is comprised in the final-version software, excluding the file from the differentiation files of the transition software; and
when the software of one to-be-upgraded version has a file excluded from the software of the other to-be-upgraded version, and a file with a same name as the excluded file is not comprised in the final-version software, retaining the file in the differentiation files of the transition software.

4. The method according to any one of claims 1 to 3, wherein the generating (12) a FOTA upgrade package according to comparison of file names and file binary formats between the transition software and final-version software specifically comprises:
comparing (25) the transition software and the final-version software;
saving (26) a file, which is comprised in the final-version software and is not comprised in the transition software, as an overwrite file of the FOTA upgrade package;
saving (27) different parts of the files, which have the same file name but are in different binary formats, as a difference file of the FOTA upgrade package; and
generating (28) the FOTA upgrade package according to the overwrite file and the difference file of the FOTA upgrade package.

5. The method according to claim 4, wherein the generating (12) a FOTA upgrade package according to comparison of file names and file binary formats between the transition software and final-version software further comprises:
saving a data of a secure digital memory card of the final-version software as an upgrade file of the FOTA upgrade package; and
correspondingly generating the FOTA upgrade package according to the upgrade file, the overwrite file, and the difference file of the FOTA upgrade package.

6. The method according to claim 5, wherein the generating (12) a FOTA upgrade package according to comparison of file names and file binary formats between the transition software and final-version software further comprises:
writing a file, which is comprised in the transition software and is not comprised in the final-version software, into an upgrade script of the FOTA upgrade package as a to-be-deleted file, so as to delete the to-be-deleted file by using a script command in an upgrade process.

7. The method according to any one of claims 1 to 6, wherein the method specifically comprises:
when the software of the two to-be-upgraded versions is first-version software and second-version software, generating transition software, namely, first transition software, according to comparison of the first-version software and the second-version software, and generating a FOTA upgrade package, namely, a first FOTA upgrade package, according to comparison of file names and file binary formats between the first transition software and the final-version software, wherein the first FOTA upgrade package is used to simultaneously support online upgrade of the software of the two to-be-upgraded versions, namely, the first-version software and the second-version software, to the final-version software by using the wireless network.

8. The method according to claim 7, wherein the method further comprises:
when software of more than two to-be-upgraded versions is comprised, and there are K+2 to-be-upgraded versions, wherein K is a positive integer, generating K+1^{th} transition software according to comparison of file names and binary formats between K+2^{th}-version software and K^{th} transition software, wherein K is the positive integer; and
generating a K+1^{th} FOTA upgrade package according to comparison of file names and file binary formats between the K+1^{th} transition software and the final-version software, wherein the K+1^{th} FOTA upgrade package is used to simultaneously support online upgrade of software of the K+2 to-be-upgraded versions to the final-version software by using the wireless network.

9. An apparatus (30) for generating a firmware over the air, FOTA upgrade package, comprising:
a first generating unit (31), configured to generate transition software according to comparison of file names and file binary formats of software of two to-be-upgraded versions; and
a second generating unit (32), configured to generate a FOTA upgrade package according to comparison of file names and file binary formats between the transition software generated by the first generating unit and final-version software, wherein the FOTA upgrade package is used to simultaneously support online upgrade of the software of the two to-be-upgraded versions to the final-version software by using a wireless network.

10. The apparatus (30) according to claim 9, wherein the first generating unit (31) comprises a first comparing module (310), a first saving module (311), and a first generating module (312), wherein:
the first comparing module (310) is configured to compare the software of the two to-be-upgraded versions;
the first saving module (311) is configured to save files, which have a same file name and are in a same file binary format, as a common file of the transition software; and is further configured to save files, which have different file names or which have a same file name and are in different binary formats, as differentiation files of the transition software; and
the first generating module (312) is configured to generate the transition software according to the common file of the transition software and the differentiation files of the transition software that are saved by the first saving module.

11. The apparatus (30) according to claim 10, wherein the first saving module (311) is specifically configured to:
when the final-version software comprises a file with the same name as the files, in the software of the two to-be-upgraded versions, that have the same file name but are in different binary formats, exclude the files, which have the same file name but are in different binary formats, from the differentiation files of the transition software;
when the final-version software does not comprise a file with the same name as the files, in the software of the two to-be-upgraded versions, that have the same file name but are in different binary formats, retain the files, which have the same file name but are in different binary formats, in the differentiation files of the transition software;
when the software of one to-be-upgraded version has a file excluded from the software of the other to-be-upgraded version, and a file with a same name as the excluded file is comprised in the final-version software, exclude the file from the differentiation files of the transition software; and
when the software of one to-be-upgraded version has a file excluded from the software of the other to-be-upgraded version, and a file with a same name as the excluded file is not comprised in the final-version software, retain the file in the differentiation files of the transition software.

12. The apparatus (30) according to any one of claims 9 to 11, wherein the second generating unit (32) comprises a second comparing module (320), a second saving module (322), and a second generating module (323), wherein:
the second comparing module (320) is configured to compare the transition software and the final-version software;
the second saving module (322) is configured to save a file, which is comprised in the final-version software and is not comprised in the transition software generated by the first generating module, as an overwrite file of the FOTA upgrade package; and is further configured to save different parts of the files, which have the same file name but are in different binary formats, as a difference file of the FOTA upgrade package; and
the second generating module (323) is configured to generate the FOTA upgrade package according to the overwrite file and the difference file of the FOTA upgrade package that are saved by the second saving module (322).

13. The apparatus (30) according to claim 12, wherein:
the second saving module (322) is further configured to save a data of a secure digital memory card of the final-version software as an upgrade file of the FOTA upgrade package; and
correspondingly, the second generating module (323) is specifically configured to generate the FOTA upgrade package according to the upgrade file, the overwrite file, and the difference file of the FOTA upgrade package that are saved by the second saving module (322).

14. The apparatus (30) according to claim 13, wherein:
the first generating module (31) is further configured to write a file, which is comprised in the transition software and is not comprised in the final-version software, into an upgrade script of the FOTA upgrade package as a to-be-deleted file, so as to delete the to-be-deleted file by using a script command in an upgrade process.

15. The apparatus (30) according to any one of claims 9 to 14, wherein when the software of the two to-be-upgraded versions is first-version software and second-version software, the apparatus is specifically configured to:
the first generating unit (31) specifically generates transition software, namely, first transition software, according comparison of the first-version software and the second-version software, and the second generating unit generates a FOTA upgrade package, namely, a first FOTA upgrade package, according to comparison of file names and file binary formats between the first transition software generated by the first generating unit and the final-version software, wherein the first FOTA upgrade package is used to simultaneously support online upgrade of the software of the two to-be-upgraded versions, namely, the first-version software and the second-version software, to the final-version software by using the wireless network.

16. The apparatus (30) according to claim 15, wherein the apparatus (30) is further configured to:
when software of more than two to-be-upgraded versions is comprised, and there are K+2 to-be-upgraded versions, wherein K is a positive integer, the first generating unit is specifically configured to generate K+1^{th} transition software according to comparison of file names and file binary formats between K+2^{th}-version software and K^{th} transition software, wherein K is the positive integer; and
the second generating unit (32) is specifically configured to generate a K+1^{th} FOTA upgrade package according to comparison of file names and file binary formats between the K+1^{th} transition software generated by the first generating unit and the final-version software, wherein the K+1^{th} FOTA upgrade package is used to simultaneously support online upgrade of software of the K+2 to-be-upgraded versions to the final-version software by using the wireless network.

17. A software upgrade method for upgrading software of two to-be-upgraded versions to a final version software, comprising:
acquiring (41, 51) a firmware over the air, FOTA upgrade package generated according to any method of claims 1 to 8; and
using (42) the FOTA upgrade package to upgrade a software system of a mobile terminal.

18. The method according to claim 17, wherein when the FOTA upgrade package comprises an upgrade file, an overwrite file, and a difference file, the upgrading a software system of a mobile terminal specifically comprises:
saving (52) the upgrade file of the FOTA upgrade package as a file, with a same name, of the software system;
saving (53) the overwrite file of the FOTA upgrade package as a file of the software system; and
merging (54) the difference file of the FOTA upgrade package with a same-name file of the software system as a file; and saving the merged file as a same-name file of the software system.

19. The method according to claim 18, wherein the upgrading a software system of a mobile terminal further specifically comprises:
deleting (55), from the software system by using a script command, a to-be-deleted file that is written into an upgrade script of the FOTA upgrade package.

20. A mobile terminal (60) for upgrading software of two to-be-upgraded versions to a final version software, comprising an acquiring unit (61) and an upgrading unit (62), wherein:
the acquiring unit (61) is configured to acquire a firmware over the air, FOTA upgrade package generated according to any method of claims 1 to 8; and
the upgrading unit (62) is configured to upgrade a software system of the mobile terminal by using the FOTA upgrade package.

21. The mobile terminal (60) according to claim 20, wherein the upgrading unit (62) specifically comprises a first saving module (621), a second saving module (622), and a third saving module (623), wherein:
when the FOTA upgrade package comprises an upgrade file, an overwrite file, and a difference file, the first saving module (621) saves the upgrade file of the FOTA upgrade package as a file, with a same name, of the software system; the second saving module (622) saves the overwrite file of the FOTA upgrade package as a file of the software system; and the third saving module (623) merges the difference file of the FOTA upgrade package with the same-name file of the software system, and saves a merged file as a same-name file of the software system.

22. The mobile terminal (60) according to claim 21, wherein the upgrading unit (62) further comprises a deleting module (624), wherein:
the deleting module deletes (624), from the software system by using a script command, a to-be-deleted file that is written into an upgrade script of the FOTA upgrade package.

## Patentansprüche

1. Verfahren zur Erzeugung eines "Over-the-Air"-Firmware-, FOTA, Aktualisierungspakets, umfassend:
Erzeugen (11) einer Übergangssoftware gemäß einem Vergleich von Dateinamen und binären Dateiformaten von Software von zwei zu aktualisierenden Versionen; und
Erzeugen (12) eines FOTA-Aktualisierungspakets gemäß einem Vergleich von Dateinamen und binären Dateiformaten zwischen der Übergangssoftware und Software in finaler Version, wobei das FOTA-Aktualisierungspaket dazu verwendet wird, gleichzeitig eine Online-Aktualisierung der Software der zwei zu aktualisierenden Versionen auf die Software in finaler Version unter Verwendung eines drahtlosen Netzwerks zu unterstützen.

2. Verfahren nach Anspruch 1, wobei das Erzeugen (11) von Übergangssoftware gemäß einem Vergleich von Dateinamen und binären Dateiformaten von Software von zwei zu aktualisierenden Versionen speziell umfasst:
Vergleichen (21) der Software der zwei zu aktualisierenden Versionen;
Speichern (22) von Dateien, die den gleichen Dateinamen haben und in einem gleichen binären Dateiformat vorliegen, als eine gemeinsame Datei der Übergangssoftware;
Speichern (23) von Dateien, die unterschiedliche Dateinamen haben, oder die den gleichen Dateinamen haben und in unterschiedlichen Binärformaten vorliegen, als Differenzierungsdateien der Übergangssoftware; und
Erzeugen (24) der Übergangssoftware gemäß der gemeinsamen Datei der Übergangssoftware und den Differenzierungsdateien der Übergangssoftware.

3. Verfahren nach Anspruch 2, wobei das Speichern (23) von Dateien, die unterschiedliche Dateinamen haben, oder die den gleichen Dateinamen haben und in unterschiedlichen Binärformaten vorliegen, als Differenzierungsdateien der Übergangssoftware, speziell umfasst:
wenn die Software in finaler Version eine Datei mit dem gleichen Namen wie die Dateien in der Software der zwei zu aktualisierenden Versionen, die den gleichen Dateinamen haben, aber in unterschiedlichen Binärformaten vorliegen, umfasst, Ausschließen der Dateien, die den gleichen Dateinamen haben, aber in unterschiedlichen Binärformaten vorliegen, aus den Differenzierungsdateien der Übergangssoftware;
wenn die Software in finaler Version keine Datei mit dem gleichen Namen wie die Dateien in der Software der zwei zu aktualisierenden Versionen, die den gleichen Dateinamen haben, aber in unterschiedlichen Binärformaten vorliegen, umfasst, Beibehalten der Dateien, die den gleichen Dateinamen haben, aber in unterschiedlichen Binärformaten vorliegen, in den Differenzierungsdateien der Übergangssoftware;
wenn die Software einer zu aktualisierenden Version eine Datei aufweist, die von der Software der anderen zu aktualisierenden Version ausgeschlossen ist, und eine Datei mit dem gleichen Namen wie die ausgeschlossene Datei in der Software in finaler Version enthalten ist, Ausschließen der Datei von den Differenzierungsdateien der Übergangssoftware; und
wenn die Software einer zu aktualisierenden Version eine Datei aufweist, die von der Software der anderen zu aktualisierenden Version ausgeschlossen ist, und eine Datei mit dem gleichen Namen wie die ausgeschlossene Datei nicht in der Software in finaler Version enthalten ist, Beibehalten der Datei in den Differenzierungsdateien der Übergangssoftware.

4. Verfahren nach einem der Ansprüche 1 bis 3, wobei das Erzeugen (12) eines FOTA-Aktualisierungspakets gemäß einem Vergleich von Dateinamen und binären Dateiformaten zwischen der Übergangssoftware und der Software in finaler Version speziell umfasst:
Vergleichen (25) der Übergangssoftware und der Software in finaler Version;
Speichern (26) einer Datei, die in der Software in finaler Version enthalten ist und nicht in der Übergangssoftware enthalten ist, als eine Überschreibungsdatei des FOTA-Aktualisierungspakets;
Speichern (27) unterschiedlicher Teile der Dateien, die den gleichen Dateinamen haben, aber in unterschiedlichen Binärformaten vorliegen, als Differenzdatei des FOTA-Aktualisierungspakets; und
Erzeugen (28) des FOTA-Aktualisierungspakets gemäß der Überschreibungsdatei und der Differenzdatei des FOTA-Aktualisierungspakets.

5. Verfahren nach Anspruch 4, wobei das Erzeugen (12) eines FOTA-Aktualisierungspakets gemäß einem Vergleich von Dateinamen und binären Dateiformaten zwischen der Übergangssoftware und der Software in finaler Version ferner umfasst:
Speichern von Daten einer sicheren digitalen Speicherkarte der Software in finaler Version als eine Aktualisierungsdatei des FOTA-Aktualisierungspakets; und
entsprechendes Erzeugen des FOTA-Aktualisierungspakets gemäß der Aktualisierungsdatei, der Überschreibungsdatei, und der Differenzdatei des FOTA-Aktualisierungspakets.

6. Verfahren nach Anspruch 5, wobei das Erzeugen (12) eines FOTA-Aktualisierungspakets gemäß einem Vergleich von Dateinamen und binären Dateiformaten zwischen der Übergangssoftware und der Software in finaler Version ferner umfasst:
Schreiben einer Datei, die in der Übergangssoftware enthalten ist und nicht in der Software in finaler Version enthalten ist, in ein Aktualisierungsskript des FOTA-Aktualisierungspakets als eine zu löschende Datei, um die zu löschende Datei unter Verwendung eines Skriptbefehls in einem Aktualisierungsprozess zu löschen.

7. Verfahren nach einem der Ansprüche 1 bis 6, wobei das Verfahren speziell umfasst:
wenn die Software der zwei zu aktualisierenden Versionen eine Software in erster Version und eine Software in zweiter Version ist, Erzeugen einer Übergangssoftware, nämlich einer ersten Übergangssoftware, gemäß einem Vergleich der Software in erster Version und der Software in zweiter Version, und
Erzeugen eines FOTA-Aktualisierungspakets, nämlich eines ersten FOTA-Aktualisierungspakets, gemäß einem Vergleich von Dateinamen und binären Dateiformaten zwischen der ersten Übergangssoftware und der Software in finaler Version, wobei das erste FOTA-Aktualisierungspaket dazu verwendet wird, gleichzeitig eine Online-Aktualisierung der Software der zwei zu aktualisierenden Versionen, nämlich der Software in erster Version und der Software in zweiter Version, auf die Software in finaler Version unter Verwendung des drahtlosen Netzwerks zu unterstützen.

8. Verfahren nach Anspruch 7, wobei das Verfahren ferner umfasst:
wenn Software von mehr als zwei zu aktualisierenden Versionen enthalten ist, und es K+2 zu aktualisierende Versionen gibt, wobei K eine positive ganze Zahl ist, Erzeugen von einer K+1-ten Übergangssoftware gemäß einem Vergleich von Dateinamen und Binärformaten zwischen Software in K+2-ter Version und K-ter Übergangssoftware, wobei K die positive ganze Zahl ist; und
Erzeugen eines K+1-ten FOTA-Aktualisierungspakets gemäß einem Vergleich von Dateinamen und binären Dateiformaten zwischen der K+1-ten Übergangssoftware und der Software in finaler Version, wobei das K+1-te FOTA-Aktualisierungspaket dazu verwendet wird, gleichzeitig eine Online-Aktualisierung der Software der K+2 zu aktualisierenden Versionen auf die Software in finaler Version über das drahtlose Netzwerk zu unterstützen.

9. Vorrichtung (30) zur Erzeugung eines "Over-the-Air"-Firmware-, FOTA, Aktualisierungspakets, umfassend:
eine erste Erzeugungseinheit (31), die dazu konfiguriert ist, eine Übergangssoftware gemäß einem Vergleich von Dateinamen und binären Dateiformaten von Software von zwei zu aktualisierenden Versionen zu erzeugen; und
eine zweite Erzeugungseinheit (32), die dazu konfiguriert ist, ein FOTA-Aktualisierungspaket gemäß einem Vergleich von Dateinamen und binären Dateiformaten zwischen der durch die erste Erzeugungseinheit erzeugten Übergangssoftware und der Software in finaler Version zu erzeugen, wobei das FOTA-Aktualisierungspaket dazu verwendet wird, gleichzeitig eine Online-Aktualisierung der Software der zwei zu aktualisierenden Versionen auf die Software in finaler Version über ein drahtloses Netzwerk zu unterstützen.

10. Vorrichtung nach Anspruch 9, wobei die erste Erzeugungseinheit (31) ein erstes Vergleichsmodul (310), ein erstes Speichermodul (311), und ein erstes Erzeugungsmodul (312) umfasst, wobei
das erste Vergleichsmodul (310) dazu konfiguriert ist, die Software der zwei zu aktualisierenden Versionen zu vergleichen;
das erste Speichermodul (311) dazu konfiguriert ist, Dateien, die den gleichen Dateinamen haben und in einem gleichen binären Dateiformat vorliegen, als eine gemeinsame Datei der Übergangssoftware zu speichern; und ferner dazu konfiguriert ist, Dateien, die unterschiedliche Dateinamen haben, oder die den gleichen Dateinamen haben und in unterschiedlichen Binärformaten vorliegen, als Differenzierungsdateien der Übergangssoftware zu speichern; und
das erste Erzeugungsmodul (312) dazu konfiguriert ist, die Übergangssoftware gemäß der gemeinsamen Datei der Übergangssoftware und den Differenzierungsdateien der Übergangssoftware, die durch das erste Speichermodul gespeichert werden, zu erzeugen.

11. Vorrichtung (30) nach Anspruch 10, wobei das erste Speichermodul (311) speziell konfiguriert ist zum:
wenn die Software in finaler Version eine Datei mit dem gleichen Namen wie die Dateien in der Software der zwei zu aktualisierenden Versionen, die den gleichen Dateinamen haben, aber in unterschiedlichen Binärformaten vorliegen, umfasst, Ausschließen der Dateien, die den gleichen Dateinamen haben, aber in unterschiedlichen Binärformaten vorliegen, aus den Differenzierungsdateien der Übergangssoftware;
wenn die Software in finaler Version keine Datei mit dem gleichen Namen wie die Dateien in der Software der zwei zu aktualisierenden Versionen, die den gleichen Dateinamen haben, aber in unterschiedlichen Binärformaten vorliegen, umfasst, Beibehalten der Dateien, die den gleichen Dateinamen haben, aber in unterschiedlichen Binärformaten vorliegen, in den Differenzierungsdateien der Übergangssoftware;
wenn die Software einer zu aktualisierenden Version eine Datei aufweist, die von der Software der anderen zu aktualisierenden Version ausgeschlossen ist, und eine Datei mit dem gleichen Namen wie die ausgeschlossene Datei in der Software in finaler Version enthalten ist, Ausschließen der Datei von den Differenzierungsdateien der Übergangssoftware; und
wenn die Software einer zu aktualisierenden Version eine Datei aufweist, die von der Software der anderen zu aktualisierenden Version ausgeschlossen ist, und eine Datei mit dem gleichen Namen wie die ausgeschlossene Datei nicht in der Software in finaler Version enthalten ist, Beibehalten der Datei in den Differenzierungsdateien der Übergangssoftware.

12. Vorrichtung (30) nach einem der Ansprüche 9 bis 11, wobei die zweite Erzeugungseinheit (32) ein zweites Vergleichsmodul (320), ein zweites Speichermodul (322), und ein zweites Erzeugungsmodul (323) umfasst, wobei:
das zweite Vergleichsmodul (320) dazu konfiguriert ist, die Übergangssoftware und die Software in finaler Version zu vergleichen;
das zweite Speichermodul (322) dazu konfiguriert ist, eine Datei, die in der Software in finaler Version enthalten ist und nicht in der durch das erste Erzeugungsmodul erzeugten Übergangssoftware enthalten ist, als eine Überschreibungsdatei des FOTA-Aktualisierungspakets zu speichern; und ferner dazu konfiguriert ist, unterschiedliche Teile der Dateien, die den gleichen Dateinamen haben, aber in unterschiedlichen Binärformaten vorliegen, als eine Differenzdatei des FOTA-Aktualisierungspakets zu speichern; und
das zweite Erzeugungsmodul (323) dazu konfiguriert ist, das FOTA-Aktualisierungspaket gemäß der Überschreibungsdatei und der Differenzdatei des FOTA-Aktualisierungspakets, die durch das zweite Speichermodul (322) gespeichert werden, zu erzeugen.

13. Vorrichtung (30) nach Anspruch 12, wobei:
das zweite Speichermodul (322) ferner dazu konfiguriert ist, Daten einer sicheren digitalen Speicherkarte der Software in finaler Version als eine Aktualisierungsdatei des FOTA-Aktualisierungspakets zu speichern; und
entsprechend das zweite Erzeugungsmodul (323) speziell dazu konfiguriert ist, das FOTA-Aktualisierungspaket gemäß der Aktualisierungsdatei, der Überschreibungsdatei, und der Differenzdatei des FOTA-Aktualisierungspakets, die durch das zweite Speichermodul (322) gespeichert werden, zu erzeugen.

14. Vorrichtung (30) nach Anspruch 13, wobei:
das erste Erzeugungsmodul (31) ferner dazu konfiguriert ist, eine Datei, die in der Übergangssoftware enthalten ist und nicht in der Software in finaler Version enthalten ist, als eine zu löschende Datei in ein Aktualisierungsskript des FOTA-Aktualisierungspakets zu schreiben, um die zu löschende Datei unter Verwendung eines Skriptbefehls in einem Aktualisierungsprozess zu löschen.

15. Vorrichtung (30) nach einem der Ansprüche 9 bis 14, wobei, wenn die Software der zwei zu aktualisierenden Versionen eine Software in erster Version und eine Software in zweiter Version ist, die Vorrichtung speziell konfiguriert ist zum:
die erste Erzeugungseinheit (31) erzeugt speziell eine Übergangssoftware, nämlich eine erste Übergangssoftware, entsprechend einem Vergleich der Software in erster Version und der Software in zweiter Version, und die zweite Erzeugungseinheit erzeugt ein FOTA-Aktualisierungspaket, nämlich ein erstes FOTA-Aktualisierungspaket, gemäß dem Vergleich von Dateinamen und binären Dateiformaten zwischen der durch die erste Erzeugungseinheit erzeugten ersten Übergangssoftware und der Software in finaler Version, wobei das erste FOTA-Aktualisierungspaket dazu verwendet wird, gleichzeitig eine Online-Aktualisierung der Software der zwei zu aktualisierenden Versionen, nämlich der Software in erster Version und der Software in zweiter Version, auf die Software in finaler Version über das drahtlose Netzwerk zu unterstützen.

16. Vorrichtung (30) nach Anspruch 15, wobei die Vorrichtung (30) ferner konfiguriert ist zum:
wenn Software von mehr als zwei zu aktualisierenden Versionen enthalten ist, und es K+2 zu aktualisierende Versionen gibt, wobei K eine positive ganze Zahl ist, ist die erste Erzeugungseinheit speziell dazu konfiguriert, eine K+1-te Übergangssoftware gemäß einem Vergleich von Dateinamen und binären Dateiformaten zwischen Software K+2-ter Version und K-ter Übergangssoftware zu erzeugen, wobei K die positive ganze Zahl ist; und
die zweite Erzeugungseinheit (32) ist speziell dazu konfiguriert, ein K+1-tes FOTA-Aktualisierungspaket gemäß einem Vergleich von Dateinamen und binären Dateiformaten zwischen der durch die erste Erzeugungseinheit erzeugten K+1-ten Übergangssoftware und der Software in finaler Version zu erzeugen, wobei das K+1-te FOTA-Aktualisierungspaket dazu verwendet wird, gleichzeitig eine Online-Aktualisierung der Software der K+2 zu aktualisierenden Versionen auf die Software in finaler Version über das drahtlose Netzwerk zu unterstützen.

17. Software-Aktualisierungsverfahren zum Aktualisieren von Software von zwei zu aktualisierenden Versionen auf eine Software in finaler Version, umfassend:
Erfassen (41, 51) eines "Over-the-Air"-Firmware-, FOTA, Aktualisierungspakets, das gemäß einem Verfahren der Ansprüche 1 bis 8 erzeugt wurde; und
Verwenden (42) des FOTA-Aktualisierungspakets, um ein Softwaresystem eines mobilen Endgeräts zu aktualisieren.

18. Verfahren nach Anspruch 17, wobei, wenn das FOTA-Aktualisierungspaket eine Aktualisierungsdatei, eine Überschreibungsdatei, und eine Differenzdatei umfasst, das Aktualisieren eines Softwaresystems eines mobilen Endgeräts speziell umfasst:
Speichern (52) der Aktualisierungsdatei des FOTA-Aktualisierungspakets als eine Datei, mit dem gleichen Namen, des Softwaresystems;
Speichern (53) der Überschreibungsdatei des FOTA-Aktualisierungspakets als eine Datei des Softwaresystems; und
Zusammenführen (54) der Differenzdatei des FOTA-Aktualisierungspakets mit der gleichnamigen Datei des Softwaresystems zu einer Datei; und Speichern der zusammengeführten Datei als eine gleichnamige Datei des Softwaresystems.

19. Verfahren nach Anspruch 18, wobei das Aktualisieren eines Softwaresystems eines mobilen Endgeräts ferner speziell umfasst:
Löschen (55), aus dem Softwaresystem unter Verwendung eines Skriptbefehls, einer zu löschenden Datei, die in einem Aktualisierungsskript des FOTA-Aktualisierungspakets geschrieben ist.

20. Mobiles Endgerät (60) zum Aktualisieren von Software von zwei zu aktualisierenden Versionen auf eine Software in finaler Version, umfassend eine Erfassungseinheit (61) und eine Aktualisierungseinheit (62), wobei:
die Erfassungseinheit (61) dazu konfiguriert ist, ein "Over-the-Air"-Firmware-, FOTA, Aktualisierungspaket zu empfangen, das gemäß einem Verfahren der Ansprüche 1 bis 8 erzeugt wurde; und
die Aktualisierungseinheit (62) dazu konfiguriert ist, ein Softwaresystem des mobilen Endgeräts unter Verwendung des FOTA-Aktualisierungspakets zu aktualisieren.

21. Mobiles Endgerät (60) nach Anspruch 20, wobei die Aktualisierungseinheit (62) speziell ein erstes Speichermodul (621), ein zweites Speichermodul (622), und ein drittes Speichermodul (623) umfasst, wobei
wenn das FOTA-Aktualisierungspaket eine Aktualisierungsdatei, eine Überschreibungsdatei, und eine Differenzdatei umfasst, das erste Speichermodul (621) die Aktualisierungsdatei des FOTA-Aktualisierungspakets als eine Datei, mit dem gleichen Namen, des Softwaresystems speichert; das zweite Speichermodul (622) die Überschreibungsdatei des FOTA-Aktualisierungspakets als eine Datei des Softwaresystems speichert; und das dritte Speichermodul (623) die Differenzdatei des FOTA-Aktualisierungspakets mit der gleichnamigen Datei des Softwaresystems zusammenführt, und eine zusammengeführte Datei als eine gleichnamige Datei des Softwaresystems speichert.

22. Mobiles Endgerät (60) nach Anspruch 21, wobei die Aktualisierungseinheit (62) ferner ein Löschmodul (624) umfasst, wobei:
das Löschmodul eine zu löschende Datei, die in einem Aktualisierungsskript des FOTA-Aktualisierungspakets geschrieben ist, unter Verwendung eines Skriptbefehls aus dem Softwaresystem löscht (624).

## Revendications

1. Procédé pour générer un programme de mise à jour de micrologiciel par liaison radio (FOTA), consistant :
à générer (11) un logiciel de transition en fonction d'une comparaison de noms de fichier et de formats binaires de fichier d'un logiciel en deux versions qui doivent être mises à jour ; et
à générer (12) un programme de mise à jour de micrologiciel FOTA en fonction d'une comparaison de noms de fichier et de formats binaires de fichier entre le logiciel de transition et un logiciel dans sa version finale, dans lequel le programme de mise à jour de micrologiciel FOTA est utilisé pour prendre, en même temps, en charge une mise à jour en ligne du logiciel en deux versions qui doivent être mises à jour, au logiciel dans sa version finale à l'aide d'un réseau sans fil.

2. Procédé selon la revendication 1, dans lequel la génération (11) d'un logiciel de transition en fonction d'une comparaison de noms de fichier et de formats binaires de fichier d'un logiciel en deux versions qui doivent être mises à jour consiste explicitement :
à comparer (21) le logiciel en deux versions qui doivent être mises à jour ;
à sauvegarder (22) des fichiers, qui ont un même nom de fichier et sont dans un même format binaire de fichier, sous la forme d'un fichier commun du logiciel de transition ;
à sauvegarder (23) des fichiers, qui ont des noms de fichier différents ou qui ont un même nom de fichier et sont dans des formats binaires différents, sous la forme de fichiers de différenciation du logiciel de transition ; et
à générer (24) le logiciel de transition en fonction du fichier commun du logiciel de transition et des fichiers de différenciation du logiciel de transition.

3. Procédé selon la revendication 2, dans lequel la sauvegarde (23) de fichiers, qui ont des noms de fichier différents ou qui ont un même nom de fichier et sont dans des formats binaires différents, sous la forme de fichiers de différenciation du logiciel de transition consiste explicitement :
lorsque le logiciel dans sa version finale comprend un fichier ayant le même nom que celui des fichiers, dans le logiciel en deux versions qui doivent être mises à jour, qui ont le même nom de fichier mais sont dans des formats binaires différents, à exclure les fichiers, qui ont le même nom de fichier mais sont dans des formats binaires différents, des fichiers de différenciation du logiciel de transition ;
lorsque le logiciel dans sa version finale ne comprend pas un fichier ayant le même nom que celui des fichiers, dans le logiciel en deux versions qui doivent être mises à jour, qui ont le même nom de fichier mais sont dans des formats binaires différents, à conserver les fichiers, qui ont le même nom de fichier mais sont dans des formats binaires différents, dans les fichiers de différenciation du logiciel de transition ;
lorsque le logiciel composé d'une version qui doit être mise à jour, comporte un fichier exclu du logiciel composé de l'autre version qui doit être mise à jour, et un fichier ayant le même nom que celui du fichier exclu, est inclus dans le logiciel dans sa version finale, à exclure le fichier des fichiers de différenciation du logiciel de transition ; et
lorsque le logiciel composé d'une version qui doit être mise à jour, comporte un fichier exclu du logiciel composé de l'autre version qui doit être mise à jour, et un fichier ayant le même nom que celui du fichier exclu, n'est pas inclus dans le logiciel dans sa version finale, à conserver le fichier dans les fichiers de différenciation du logiciel de transition.

4. Procédé selon l'une quelconque des revendications 1 à 3, dans lequel la génération (12) d'un programme de mise à jour de micrologiciel FOTA en fonction d'une comparaison de noms de fichier et de formats binaires de fichier entre le logiciel de transition et un logiciel dans sa version finale, consiste explicitement :
à comparer (25) le logiciel de transition et le logiciel dans sa version finale ;
à sauvegarder (26) un fichier, qui est inclus dans le logiciel dans sa version finale et n'est pas inclus dans le logiciel de transition, sous la forme d'un fichier d'écrasement du programme de mise à jour de micrologiciel FOTA ;
à sauvegarder (27) différentes parties des fichiers, qui ont le même nom de fichier mais sont dans des formats binaires différents, sous la forme d'un fichier de différence du programme de mise à jour de micrologiciel FOTA ; et
à générer (28) le programme de mise à jour de micrologiciel FOTA en fonction du fichier d'écrasement et du fichier de différence du programme de mise à jour de micrologiciel FOTA.

5. Procédé selon la revendication 4, dans lequel la génération (12) d'un programme de mise à jour de micrologiciel FOTA en fonction d'une comparaison de noms de fichier et de formats binaires de fichier entre le logiciel de transition et un logiciel dans sa version finale consiste en outre :
à sauvegarder une donnée d'une carte mémoire numérique sécurisée du logiciel dans sa version finale sous la forme d'un fichier de mise à jour du programme de mise à jour de micrologiciel FOTA ; et
à générer de manière correspondante le programme de mise à jour de micrologiciel FOTA en fonction du fichier de mise à jour, du fichier d'écrasement et du fichier de différence du programme de mise à jour de micrologiciel FOTA.

6. Procédé selon la revendication 5, dans lequel la génération (12) d'un programme de mise à jour de micrologiciel FOTA en fonction d'une comparaison de noms de fichier et de formats binaires de fichier entre le logiciel de transition et un logiciel dans sa version finale consiste en outre :
à écrire un fichier, qui est inclus dans le fichier de transition et n'est pas inclus dans le logiciel dans sa version finale, dans un script de mise à jour du programme de mise à jour de micrologiciel FOTA sous la forme d'un fichier qui doit être supprimé, de sorte à supprimer le fichier qui doit être supprimé, en utilisant une commande de script dans un processus de mise à jour.

7. Procédé selon l'une quelconque des revendications 1 à 6, dans lequel le procédé consiste explicitement :
lorsque le logiciel en deux versions qui doivent être mises à jour, est un logiciel dans une première version et un logiciel dans une seconde version, à générer un logiciel de transition, à savoir un premier logiciel de transition en fonction d'une comparaison du logiciel dans une première version et du logiciel dans une seconde version et à générer un programme de mise à jour de micrologiciel FOTA, à savoir un premier programme de mise à jour de micrologiciel FOTA, en fonction d'une comparaison de noms de fichier et de formats binaires de fichier entre le premier logiciel de transition et le logiciel dans sa version finale, dans lequel le premier programme de mise à jour de micrologiciel FOTA est utilisé pour prendre, en même temps, en charge une mise à jour en ligne du logiciel en deux versions qui doivent être mises à jour, à savoir le logiciel dans une première version et le logiciel dans une seconde version, au logiciel dans sa version finale à l'aide du réseau sans fil.

8. Procédé selon la revendication 7, dans lequel le procédé consiste en outre :
lorsqu'un logiciel composé d'au moins deux versions qui doivent être mises à jour, est inclus et qu'il y a K + 2 versions qui doivent être mises à jour, dans lequel K est un nombre entier positif, à générer un (K + 1)^{ième} logiciel de transition en fonction d'une comparaison de noms de fichier et de formats binaires entre le logiciel dans une (K + 2)^{ième} version et le K^{ième} logiciel de transition, dans lequel K est le nombre entier positif ; et
à générer un (K + 1)^{ième} programme de mise à jour de micrologiciel FOTA en fonction d'une comparaison de noms de fichier et de formats binaires de fichier entre le (K + 1)^{ième} logiciel de transition et le logiciel dans sa version finale, dans lequel le (K + 1)^{ième} programme de mise à jour de micrologiciel FOTA est utilisé pour prendre, en même temps, en charge une mise à jour en ligne du logiciel composé de K + 2 versions qui doivent être mises à jour, au logiciel dans sa version finale à l'aide du réseau sans fil.

9. Appareil (30) pour générer un programme de mise à jour de micrologiciel par liaison radio (FOTA), comprenant :
une première unité de génération (31), configurée pour générer un logiciel de transition en fonction d'une comparaison de noms de fichier et de formats binaires de fichier d'un logiciel en deux versions qui doivent être mises à jour ; et
une seconde unité de génération (32), configurée pour générer un programme de mise à jour de micrologiciel FOTA en fonction d'une comparaison de noms de fichier et de formats binaires de fichier entre le logiciel de transition généré par la première unité de génération et un logiciel dans sa version finale, dans lequel le programme de mise à jour de micrologiciel FOTA est utilisé pour prendre, en même temps, en charge une mise à jour en ligne du logiciel en deux versions qui doivent être mises à jour, au logiciel dans sa version finale à l'aide d'un réseau sans fil.

10. Appareil (30) selon la revendication 9, dans lequel la première unité de génération (31) comprend un premier module de comparaison (310), un premier module de sauvegarde (311) et un premier module de génération (312), dans lequel :
le premier module de comparaison (310) est configuré pour comparer le logiciel en deux versions qui doivent être mises à jour ;
le premier module de sauvegarde (311) est configuré pour sauvegarder des fichiers, qui ont un même nom de fichier et sont dans un même format binaire de fichier, sous la forme d'un fichier commun du logiciel de transition ; et est en outre configuré pour sauvegarder des fichiers, qui ont des noms de fichier différents ou qui ont un même nom de fichier et sont dans des formats binaires différents, sous la forme de fichiers de différenciation du logiciel de transition ; et
le premier module de génération (312) est configuré pour générer le logiciel de transition en fonction du fichier commun du logiciel de transition et des fichiers de différenciation du logiciel de transition qui sont sauvegardés par le premier module de sauvegarde.

11. Appareil (30) selon la revendication 10, dans lequel le premier module de sauvegarde (311) est explicitement configuré :
lorsque le logiciel dans sa version finale comprend un fichier ayant le même nom que celui des fichiers, dans le logiciel en deux versions qui doivent être mises à jour, qui ont le même nom de fichier mais sont dans des formats binaires différents, pour exclure les fichiers, qui ont le même nom de fichier mais sont dans des formats binaires différents, des fichiers de différenciation du logiciel de transition ;
lorsque le logiciel dans sa version finale ne comprend pas un fichier ayant le même nom que celui des fichiers, dans le logiciel en deux versions qui doivent être mises à jour, qui ont le même nom de fichier mais sont dans des formats binaires différents, pour conserver les fichiers, qui ont le même nom de fichier mais sont dans des formats binaires différents, dans les fichiers de différenciation du logiciel de transition ;
lorsque le logiciel composé d'une version qui doit être mise à jour, comporte un fichier exclu du logiciel composé de l'autre version qui doit être mise à jour, et un fichier ayant le même nom que celui du fichier exclu, est inclus dans le logiciel dans sa version finale, pour exclure le fichier des fichiers de différenciation du logiciel de transition ; et
lorsque le logiciel composé d'une version qui doit être mise à jour, comporte un fichier exclu du logiciel composé de l'autre version qui doit être mise à jour, et un fichier ayant le même nom que celui du fichier exclu, n'est pas inclus dans le logiciel dans sa version finale, pour conserver le fichier dans les fichiers de différenciation du logiciel de transition.

12. Appareil (30) selon l'une quelconque des revendications 9 à 11, dans lequel la seconde unité de génération (32) comprend un second module de comparaison (320), un second module de sauvegarde (322) et un second module de génération (323), dans lequel :
le second module de comparaison (320) est configuré pour comparer le logiciel de transition et le logiciel dans sa version finale ;
le second module de sauvegarde (322) est configuré pour sauvegarder un fichier, qui est inclus dans le logiciel dans sa version finale et n'est pas inclus dans le logiciel de transition généré par le premier module de génération, sous la forme d'un fichier d'écrasement du programme de mise à jour de micrologiciel FOTA ; et est en outre configuré pour sauvegarder différentes parties des fichiers, qui ont le même nom de fichier mais sont dans des formats binaires différents, sous la forme d'un fichier de différence du programme de mise à jour de micrologiciel FOTA ; et
le second module de génération (323) est configuré pour générer le programme de mise à jour de micrologiciel FOTA en fonction du fichier d'écrasement et du fichier de différence du programme de mise à jour de micrologiciel FOTA qui sont sauvegardés par le second module de sauvegarde (322).

13. Appareil (30) selon la revendication 12, dans lequel :
le second module de sauvegarde (322) est en outre configuré pour sauvegarder une donnée d'une carte mémoire numérique sécurisée du logiciel dans sa version finale sous la forme d'un fichier de mise à jour du programme de mise à jour de micrologiciel FOTA ; et
de manière correspondante, le second module de génération (323) est explicitement configuré pour générer le programme de mise à jour de micrologiciel FOTA en fonction du fichier de mise à jour, du fichier d'écrasement et du fichier de différence du programme de mise à jour de micrologiciel FOTA qui sont sauvegardés par le second module de sauvegarde (322).

14. Appareil (30) selon la revendication 13, dans lequel :
le premier module de génération (31) est en outre configuré pour écrire un fichier, qui est inclus dans le logiciel de transition et n'est pas inclus dans le logiciel dans sa version finale, dans un script de mise à jour du programme de mise à jour de micrologiciel FOTA sous la forme d'un fichier qui doit être supprimé, de sorte à supprimer le fichier qui doit être supprimé, en utilisant une commande de script dans un processus de mise à jour.

15. Appareil (30) selon l'une quelconque des revendications 9 à 14, dans lequel, lorsque le logiciel en deux versions qui doivent être mises à jour, est un logiciel dans une première version et un logiciel dans une seconde version, l'appareil est explicitement configuré de sorte que :
la première unité de génération (31) génère explicitement un logiciel de transition, à savoir un premier logiciel de transition en fonction d'une comparaison du logiciel dans une première version et du logiciel dans une seconde version et la seconde unité de génération génère un programme de mise à jour de micrologiciel FOTA, à savoir un premier programme de mise à jour de micrologiciel FOTA, en fonction d'une comparaison de noms de fichier et de formats binaires de fichier entre le premier logiciel de transition généré par la première unité de génération et le logiciel dans sa version finale, dans lequel le premier programme de mise à jour de micrologiciel FOTA est utilisé pour prendre, en même temps, en charge une mise à jour en ligne du logiciel en deux versions qui doivent être mises à jour, à savoir le logiciel dans une première version et le logiciel dans une seconde version, au logiciel dans sa version finale à l'aide du réseau sans fil.

16. Appareil (30) selon la revendication 15, dans lequel l'appareil (30) est en outre configuré de sorte que :
lorsqu'un logiciel composé d'au moins deux versions qui doivent être mises à jour, est inclus et qu'il y a K + 2 versions qui doivent être mises à jour, dans lequel K est un nombre entier positif, la première unité de génération soit explicitement configurée pour générer un (K + 1)^{ième} logiciel de transition en fonction d'une comparaison de noms de fichier et de formats binaires de fichier entre le logiciel dans une (K + 2)^{ième} version et le K^{ième} logiciel de transition, dans lequel K est le nombre entier positif ; et
la seconde unité de génération (32) soit explicitement configurée pour générer un (K + 1)^{ième} programme de mise à jour de micrologiciel FOTA en fonction d'une comparaison de noms de fichier et de formats binaires de fichier entre le (K + 1)^{ième} logiciel de transition généré par la première unité de génération et le logiciel dans sa version finale, dans lequel le (K + 1)^{ième} programme de mise à jour de micrologiciel FOTA est utilisé pour prendre, en même temps, en charge une mise à jour en ligne du logiciel composé de K + 2 versions qui doivent être mises à jour, au logiciel dans sa version finale à l'aide du réseau sans fil.

17. Procédé de mise à jour de logiciel pour mettre à jour un logiciel en deux versions qui doivent être mises à jour, à un logiciel dans sa version finale, consistant :
à acquérir (41, 51) un programme de mise à jour de micrologiciel par liaison radio (FOTA) selon un procédé quelconque selon les revendications 1 à 8 ; et
à utiliser (42) le programme de mise à jour de micrologiciel FOTA pour mettre à jour un système logiciel d'un terminal mobile.

18. Procédé selon la revendication 17, dans lequel, lorsque le programme de mise à jour de micrologiciel FOTA comprend un fichier de mise à jour, un fichier d'écrasement et un fichier de différence, la mise à jour d'un système logiciel d'un terminal mobile consiste explicitement :
à sauvegarder (52) le fichier de mise à jour du programme de mise à jour de micrologiciel FOTA sous la forme d'un fichier, ayant le même nom, du système logiciel ;
à sauvegarder (53) le fichier d'écrasement du programme de mise à jour de micrologiciel FOTA sous la forme d'un fichier du système logiciel ; et
à fusionner (54) le fichier de différences du programme de mise à jour de micrologiciel FOTA avec un fichier de même nom du système logiciel sous la forme d'un fichier ; et à sauvegarder le fichier fusionné sous la forme d'un fichier de même nom du système logiciel.

19. Procédé selon la revendication 18, dans lequel la mise à jour d'un système logiciel d'un terminal mobile consiste en outre explicitement :
à supprimer (55), du système logiciel en utilisant une commande de script, un fichier qui doit être supprimé et qui est écrit dans un script de mise à jour du programme de mise à jour de micrologiciel FOTA.

20. Terminal mobile (60) pour mettre à jour un logiciel en deux versions qui doivent être mises à jour, à un logiciel dans sa version finale, comprenant une unité d'acquisition (61) et une unité de mise à jour (62), dans lequel :
l'unité d'acquisition (61) est configurée pour acquérir un programme de mise à jour de micrologiciel par liaison radio (FOTA) généré selon un procédé quelconque selon les revendications 1 à 8 ; et
l'unité de mise à jour (62) est configurée pour mettre à jour un système logiciel du terminal mobile en utilisant le programme de mise à jour de micrologiciel FOTA.

21. Terminal mobile (60) selon la revendication 20, dans lequel l'unité de mise à jour (62) comprend explicitement un premier module de sauvegarde (621), un deuxième module de sauvegarde (622) et un troisième module de sauvegarde (623), dans lequel :
lorsque le programme de mise à jour de micrologiciel FOTA comprend un fichier de mise à jour, un fichier d'écrasement et un fichier de différence, le premier module de sauvegarde (621) sauvegarde le fichier de mise à jour du programme de mise à jour de micrologiciel FOTA sous la forme d'un fichier, ayant le même nom, du système logiciel ; le deuxième module de sauvegarde (622) sauvegarde le fichier d'écrasement du programme de mise à jour de micrologiciel FOTA sous la forme d'un fichier du système logiciel ; et le troisième module de sauvegarde (623) fusionne le fichier de différence du programme de mise à jour de micrologiciel FOTA avec le fichier de même nom du système logiciel et sauvegarde un fichier fusionné sous la forme d'un fichier de même nom du système logiciel.

22. Terminal mobile (60) selon la revendication 21, dans lequel l'unité de mise à jour (62) comprend en outre un module de suppression (624), dans lequel :
le module de suppression (624) supprime, du système logiciel en utilisant une commande de script, un fichier qui doit être supprimé et qui est écrit dans un script de mise à jour du programme de mise à jour de micrologiciel FOTA.
